# EUROPÄISCHE PATENTSCHRIFT

(11) **EP 2 632 620 B1**
(45) Veröffentlichungstag und Bekanntmachung des Hinweises auf die Patenterteilung: **25.02.2015**
(21) Anmeldenummer: 11831771.8
(22) Anmeldetag: 26.10.2011
(51) Int. Cl.: B23D 19/08, B23C 3/12, B24B 9/00, B24B 21/00, B24B 27/00

(54) **VORRICHTUNG ZUR BILDUNG EINER FASE**
APPARATUS FOR FORMING A BEVEL
DISPOSITIF DE BISEAUTAGE

(30) Priorität: 26.10.2010 DE 102010050151
(43) Veröffentlichungstag der Anmeldung: 04.09.2013
(73) Patentinhaber: Rieth, Stephan, 66606 St. Wendel (DE)
(72) Erfinder: Rieth, Stephan, 66606 St. Wendel (DE)
(74) Vertreter: Bernhardt, Reinhold
(86) Internationale Anmeldenummer: PCT/DE2011/075257
(87) Internationale Veröffentlichungsnummer: WO 2012/072071

(56) Entgegenhaltungen:
- EP-A1- 1 916 057
- US-A- 2 690 804

## Beschreibung

Die Erfindung betrifft eine Vorrichtung zur Bildung einer Fase an einer Kante eines Blechs oder eines Rohrs, die eine Anfaseinrichtung umfasst, die ein mittels eines Antriebs betriebenes, das Blech oder das Rohr bearbeitendes Werkzeug und eine das Blech oder das Rohr stützende Führungseinrichtung aufweist, wobei die Anfaseinrichtung in einer Trageinrichtung der Vorrichtung höhenverstellbar gelagert ist. Die Erfindung betrifft ferner ein Verfahren zur Bildung einer Fase an einer Kante eines Blechs oder eines Rohrs.

Eine Vorrichtung der eingangs genannten Art ist aus der EP 1 916 057 A1 bekannt. Die Vorrichtung umfasst eine Trageinrichtung für eine Fräsmaschine, in der die Stellung der Fräsmaschine veränderbar ist. Die Trageinrichtung ist auf einem Laufwagen federnd angeordnet.

Eine weitere Vorrichtung der eingangs genannten Art geht aus der US 2,690,804 A hervor. Auf einem Fahrgestell ist auf einer mit einer Feder versehenen Säule eine Trageinrichtung gelagert, in der eine Fräsmaschine höhenverstellbar angeordnet ist.

Ferner ist es durch Benutzung bekannt, ein an einem Kran aufgehängtes Scherwerkzeug an einer Kante eines Blechs anzuordnen und in eine exakt an die Position des Blechs angepassten Höhe zu bringen. Anschließend wird das Scherwerkzeug entlang der Kante geführt und schneidet dabei eine Fase in die Kante. Problematisch ist, dass die Vorrichtung bei der Bewegung entlang der Kante verklemmt, wenn die Stellung des Blechs zu stark von der ursprünglich vorgesehenen Position der Anfaseinrichtung abweicht, z.B. weil das Blech über seine Länge gesehen nur an einigen Stellen aufgebockt und dazwischen leicht gebogen ist.

Das Schneiden der Fase muss dann unterbrochen und die Position der Anfaseinrichtung an die Stellung des Blechs angepasst werden.

Der Erfindung liegt die Aufgabe zugrunde, eine Vorrichtung der eingangs genannten Art zu schaffen, die sich beim Fasen besser an die Form des Blechs bzw. des Rohrs anpasst.

Erfindungsgemäß wird diese Aufgabe dadurch gelöst, dass die Anfaseinrichtung zu der Trageinrichtung federnd gelagert ist.

Durch die federnde Lagerung in der Trageinrichtung erhält die Anfaseinrichtung eine Bewegungsfreiheit, die eine selbständige Anpassung an Änderungen der Stellung des Blechs oder des Rohrs im Verhältnis zu der Vorrichtung ermöglicht. Vorteilhaft wird dadurch eine Unterbrechung der Herstellung der Fase vermieden, die bei den bekannten Vorrichtungen beispielsweise dann auftritt, wenn der Vorschub, mit dem die Vorrichtung entlang des Blechs bewegt wird, nicht ausreicht, um einen aufgrund der Position entstehenden Bewegungswiderstand zu überwinden.

Darüber hinaus wird ein Ansetzen der Anfaseinrichtung an das Blech oder das Rohr erheblich vereinfacht, da es nicht mehr notwendig ist, die Höhe der Anfaseinrichtung exakt einzustellen. Die Anfaseinrichtung lässt sich im Rahmen der Bewegungsfreiheit, die eine Verschiebung der Anfaseinrichtung in jede Richtung um zumindest 2 cm zulässt, in der federnden Lagerung von Hand in die Position bringen, in der das Werkzeug an dem Blech angreifen kann.

Der Vorteil der federnden Lagerung zeigt sich insbesondere, wenn die Vorrichtung ein Fahrgestell umfasst, mit dem sie auf einem Untergrund fahrbar ist und in dem die Anfaseinrichtung gefedert gelagert ist. Durch die gefederte Lagerung können dann auch Unebenheiten in dem Untergrund ausgeglichen werden.

In einer besonders bevorzugten Ausgestaltung der Erfindung ist die Anfaseinrichtung in der Trageinrichtung stufenlos höhenverstellbar gelagert, wobei die Lagerung vorzugsweise eine Bewegung der Anfasrichtung in lediglich vertikaler Richtung erlaubt.

In einer weiteren Ausgestaltung der Erfindung umfasst die Lagerung eine Lagerschiene, die vorzugsweise ein T- oder ein Doppel-t-Profil aufweist und einen an der Lagerschiene verschiebbaren Lagerschlitten, der die Lagerschiene vorzugsweise umgreift.

Der Lagerschlitten weist in einer bevorzugten Ausführungsform der Erfindung zum Angreifen an der Lagerschiene eine Kugellagerung, insbesondere Kugelumlauflagerung, auf. Durch eine solche Kugellagerung wird ein Verkanten des Lagerschlittens an der Lagerschiene vermieden. Außerdem ist sie wartungsarm, da sie nur verhältnismäßig selten geschmiert werden muss.

Zweckmäßigerweise umfasst die Lagerung eine gefederte Aufhängung und/oder eine gefederte Abstützung für die Anfaseinrichtung.

In einer weiteren Ausgestaltung der Erfindung ist zur Höhenverstellung der Anfaseinrichtung eine Seilwinde und/oder eine Gewindespindel vorgesehen.

Im Fall der Seilwinde umfasst die Lagerung eine Feder, vorzugsweise eine Schraubenfeder, die mit einem Ende mit einem Seil der Seilwinde mit dem anderen Ende mit der Anfaseinrichtung verbunden ist. Diese Anfaseinrichtung ist durch den an der Lagerschiene verschiebbaren Lagerschlitten in vertikaler Richtung beweglich geführt und wird in der Vorrichtung gehalten. Die mit der Seilwinde verbundene Feder bildet eine Federung in der vertikalen Richtung.

Alternativ oder ergänzend dazu kann die Anfaseinrichtung über eine Feder mit einer auf der Gewindespindel angeordneten Mutter oder einem Gehäuse für die Mutter verbunden sein. Die Anfaseinrichtung kann von oben und/oder von unten durch die Feder gehalten sein, die dann entweder auf Zug oder auf Druck belastet ist. In dem Fall ist als Feder ebenfalls bevorzugt eine Schraubenfeder vorgesehen, die vorzugsweise um die Gewindespindel herum angeordnet ist und an der Mutter bzw. dem Gehäuse hängt oder auf ihr bzw. ihm aufsitzt.

In einer Weiterbildung der Erfindung ist die Anfaseinrichtung zur Verstellung der Größe der herzustellenden Fase beim Betrieb der Anfaseinrichtung, d.h. beim Schneiden der Fase verstellbar. Der Beginn des Fasens lässt sich dadurch erheblich vereinfachen. Da beim Fasen zunächst verhältnismäßig viel Material abgetragen werden muss, liegen, insbesondere wenn eine große Fase geschnitten werden soll, zunächst besonders große Widerstände an der Anfaseinrichtung an. Dies kann dazu führen, dass die Anfaseinrichtung an dem Blech verklemmt oder das Werkzeug stark abgenutzt oder beschädigt wird. Aus diesem Grund wird die Anfaseinrichtung zunächst derart eingestellt, dass nur eine verhältnismäßig kleine Fase geschnitten wird und die Vorrichtung wird dann unter Bildung der kleinen Fase an dem Blech oder dem Rohr in eine Stellung gebracht, in der die Kante des Blechs vollständig an der Führungseinrichtung anliegt. Anschließend wird beim Fasen die Größe der herzustellenden Fase durch Verstellung der Anfaseinrichtung so weit vergrößert, dass die beabsichtigte Fasengröße gebildet wird. Die Stelle, an der zunächst nur die kleine Fase gebildet worden ist, kann anschließend nachbearbeitet werden.

Zweckmäßigerweise ist das genannte Werkzeug ein Fräskopf, ein Messerrad einer Schermaschine, ein Schleifkopf und/oder eine ein Schleifband führende Kontaktscheibe und die genannte Führungseinrichtung weist eine Führungsrolle auf, die auf einer dem Werkzeug abgewandten Seite des Blechs angeordnet ist derart, dass es das Blech beim Fräsen gegen das Werkzeug drückt.

Wird als Werkzeug das Messerrad verwendet, bewegt sich die Vorrichtung unter Drehung des Messerrads bei gleichzeitiger Bildung der Fase an der Kante selbständig entlang der Kante. Das Messerrad zieht die gesamte Vorrichtung mit. Eine zusätzliche manuelle oder motorische Führung der Vorrichtung ist nicht notwendig.

Zur Verstellung der Größe der Fase ist zweckmäßigerweise die Stellung des Werkzeugs und/oder der Führungsrolle in der Anfaseinrichtung verstellbar, wobei vorzugsweise der Abstand zwischen dem Werkzeug und der Führungsrolle verstellbar ist.

In einer weiteren Ausgestaltung der Erfindung ist die Stellung des Werkzeugs zu dem Führungsrad in zur Vorschubrichtung des Blechs oder des Rohrs senkrechter oder in zur Vorschubvorrichtung senkrechter und paralleler Richtung verstellbar. Die Möglichkeit zur Verstellung in beiden Richtungen ist vorteilhaft, da sich bei Veränderung der Größe der Fase auch die Stelle an dem Werkzeug ändert, an der die größte Belastung anliegt und die Position des Führungsrads daran angepasst werden muss. Es wird vermieden, dass sich das Blech oder das Rohr beim Fasen verbiegt.

In einer bevorzugten Ausführungsform der Erfindung ist ein in zumindest einer Führungsschiene bewegbarer Führungsschlitten vorgesehen, der die Führungsrolle oder das Werkzeug trägt, wobei der Führungsschlitten vorzugsweise in zwei zueinander im Winkel angeordneten Führungsschienen verschiebbar ist. Ist die Führungsschiene zur Horizontalen oder zur Vertikalen verkippt angeordnet, lässt sich die Stellung des Werkzeugs zu der Führungsrolle in zur Vorschubrichtung senkrechter und paralleler Richtung verstellen.

Zweckmäßigerweise ist die Führungsrolle und/oder das Werkzeug mittels einer Gewindespindel bewegbar, die vorzugsweise durch einen Motor oder von Hand antreibbar ist. Die Gewindespindel kann zur Verschiebung zumindest einer der Führungsschienen oder des Führungsschlittens vorgesehen sein.

In einer Weiterbildung der Erfindung ist die Anfaseinrichtung in der Vorrichtung drehbar gelagert.

Nachdem auf einer Seite der Kante des Blechs die Fase gebildet worden ist, wird die Anfaseinrichtung in der Vorrichtung gedreht und die andere Seite der Kante kann bearbeitet werden. Vorteilhaft können beide Seiten der Kanten können mit einer einzigen Vorrichtung bearbeitet werden, ohne dass das Blech dafür gedreht werden muss.

Zweckmäßigerweise ist die Anfaseinrichtung frei drehbar und lässt sich in einer beliebigen Position arretieren. Vorzugsweise können bestimmte Positionen markiert sein oder Rastpositionen vorgesehen sein, z.B. Positionen, in denen die Anfaseinrichtung horizontal angeordnete Bleche bearbeiten kann. Die Anfaseinrichtung lässt sich dann einfach von einer Arbeitsposition in die andere bringen.

Die Anfaseinrichtung ist vorzugsweise um eine horizontale Achse drehbar. Während es vorstellbar ist, die horizontale Achse senkrecht zur Vorschubrichtung, in der das Blech oder das Rohr an das Werkzeug geführt wird, anzuordnen, ist sie in der bevorzugten Ausführungsform parallel zu der Vorschubrichtung angeordnet.

Zweckmäßigerweise ist die Anfaseinrichtung derart drehbar gelagert, dass sie nach einer Verdrehung um 180° das Blech in derselben Höhe aufnehmen kann wie vor der Drehung. Nachdem eine Seite einer Kante bearbeitet worden ist, muss die Anfaseinrichtung in der Vorrichtung lediglich gedreht werden und steht direkt zur Bearbeitung der anderen Seite der Kante zur Verfügung, d.h. das Werkzeug und die Führungsrolle greifen auf der jeweils anderen Seite des Blechs an.

Ferner ist die Stellung des Werkzeugs in der Vorrichtung zweckmäßigerweise zur Einstellung unterschiedlicher Fasenwinkel veränderbar, vorzugsweise verkippbar.

In einer besonders bevorzugten Ausgestaltung der Erfindung ist das Fahrgestell lenkbar. Die Vorrichtung lässt sich mit dem Fahrgestell besonders flexibel handhaben.

Zweckmäßigerweise ist das Fahrgestell mit Rädern, Rollen und/oder Kugeln versehen und kann ggf. auf Schienen geführt sein.

In einer weiteren Ausgestaltung der Erfindung ist die Führungseinrichtung und/oder das Fahrgestells mit einem Antrieb zur Bewegung der Vorrichtung im Verhältnis zu dem Blech versehen. Der Vorschub der Vorrichtung lässt sich besser kontrollieren und dadurch die Abtragsleistung erhöhen.

Zweckmäßigerweise ist die Führungseinrichtung zur Bewegung des Blechs mit zumindest einem Antriebsrad oder einer Antriebsrolle versehen, das bzw. die an dem Blech anliegt.

Zweckmäßigerweise ist ein solches Antriebsrad oder eine solche Antriebsrolle auf der dem Werkzeug zugewandten und/oder gegenüberliegenden Seite des Blechs angeordnet und derart ausgerichtet, dass einerseits die Vorrichtung entlang der Kante des Blechs bewegt, andererseits die Anfaseinrichtung an die Kante heranzieht. Das Antriebsrad oder die Antriebsrolle sind dazu in ihrer Laufrichtung um 2 ° bis 10 ° zu der Richtung, mit der die Vorrichtung entlang der Kante bewegt wird, verkippt angeordnet. Während das Antriebsrad oder die Antriebsrolle zur selbständigen Bewegung der Vorrichtung entlang der Kante des Blechs zwingend notwendig sind, wenn als Werkzeug der Fräskopf, der Schleifkopf oder die das Schleifband führende Kontaktscheibe verwendet werden, wirkt das Antriebsrad bzw. die Antriebsrolle bei Verwendung des Messerrads, das die Vorrichtung schon selbst entlang der Kante zieht, unterstützen. Es wird vermieden, dass das Messerrad an der Kante abrutscht, ohne die Fase zu schneiden und ohne die Vorrichtung an der Kante entlang zu ziehen.

In einer weiteren Ausgestaltung der Erfindung ist das Fahrgestell lenkbar. Zweckmäßigerweise sind dazu die Räder oder Rollen des Fahrgestells durch eine Welle, eine Kette oder dergleichen miteinander verbunden. Vorzugsweise sind sie bei der Bearbeitung der Kante zu der Kante hin ausgerichtet derart, dass die Vorrichtung und insbesondere die Anfaseinrichtung durch das Fahrgestellt gegen die Kante gedrückt wird. Dadurch wird unterstützt, dass sich die Vorrichtung stets in der vorgesehenen Bearbeitungsposition befindet.

Im Folgenden wird die Erfindung anhand eines Ausführungsbeispiels und der beigefügten Zeichnungen näher erläutert. Es zeigen:
- Fig. 1: eine erfindungsgemäße Vorrichtung in Seitenansicht.
- Fig. 2: die erfindungsgemäße Vorrichtung nach Fig. 1 in einer anderen Seitenansicht.
- Fig. 3: die erfindungsgemäße Vorrichtung nach Fig. 1 in Draufsicht,
- Fig. 4: die erfindungsgemäße Vorrichtung, nach Fig. 1 im Schnitt,
- Fig. 5: eine weitere erfindungsgemäße Vorrichtung in Seitenansicht,
- Fig. 6: ein Detail der erfindungsgemäßen Vorrichtung nach Fig. 1,
- Fig. 7: einen Teil einer weiteren erfindungsgemäßen Vorrichtung in Seitenansicht,
- Fig. 8: den Teil der Vorrichtung nach Fig. 7 in perspektivischer Ansicht,
- Fig. 9: ein Detail der Vorrichtung nach Fig. 7,
- Fig. 10: ein Detail einer weiteren erfindungsgemäßen Vorrichtung in perspektivischer Ansicht,
- Fig. 11: das Detail nach Fig. 10 in Seitenansicht,
- Fig. 12: das Detail nach Fig. 10 in einer anderen perspektivischen Ansicht,
- Fig. 13: ein Detail einer weiteren erfindungsgemäßen Vorrichtung in perspektivischer Ansicht,
- Fig. 14: das Detail nach Fig. 13 in einer anderen perspektivischen Ansicht, und
- Fig. 15: ein Detail der Vorrichtungen nach Fig. 1, 5 und 7 im Schnitt.

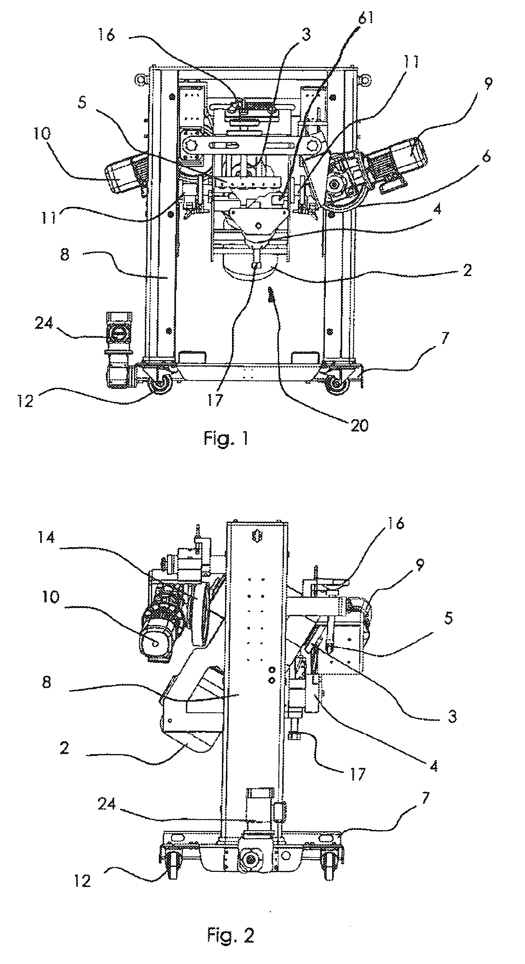

Eine in den Figuren 1 bis 3 gezeigte erfindungsgemäße Vorrichtung umfasst eine Anfaseinrichtung, die ein Schermesserrad 3 zum Schneiden einer Fase in ein Blech 1, Führungsräder 5, die neben dem Schermesserrad 3 angeordnet sind und das Blech 1 in vertikaler Richtung halten, ein Führungsrad 61, das das Blech 1 in horizontaler Richtung führt, sowie eine gegenüber dem Schermesserrad 3 und den Führungsräder 5 angeordnete Führungsrolle 4, gegen die das Blech 1 durch das Schermesserrad 3 beim Schneiden der Fase gedrückt wird.

Zur Höhenverstellung der Führungsrolle 4 ist ein Gewindestab 17 mit Griff vorgesehen. Die Position der Führungsräder 5 lässt sich mit einem Drehrad 16 verstellen.

Zum Antrieb des Schermesserrads 3 ist ein Motor 2 vorgesehen, der über ein hier nicht genauer gezeigtes Getriebe mit dem Schermesserrad 3 verbunden ist. Der Winkel, mit dem das Schermesserrad an das Blech angreift, ist verstellbar.

Alternativ zu dem Schermesserrad 3 kann die Vorrichtung auch mit einem mit Schneidplatten besetzten Fräskopf, einem Schleifkopf oder einer einen Schleifkopf oder einer ein Schleifband führenden Kontaktscheibe versehen sein.

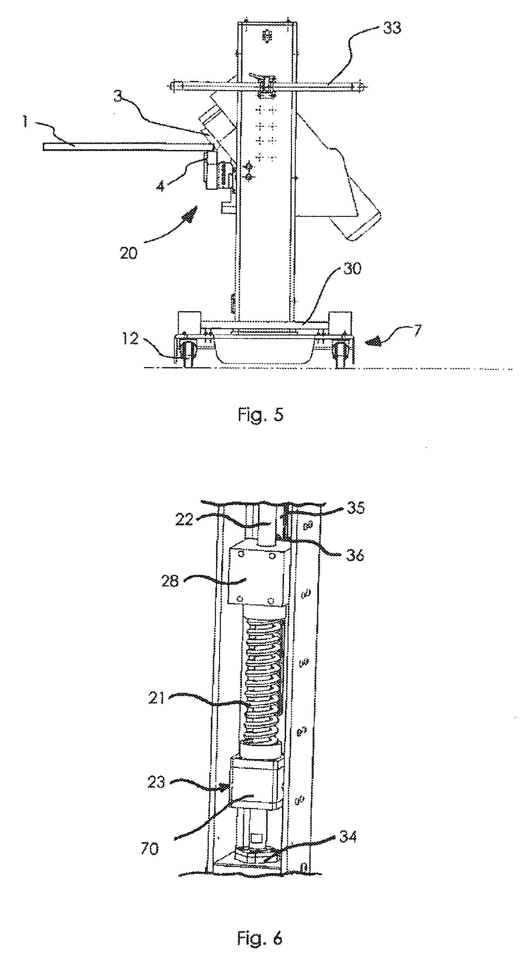

Die Anfaseinrichtung 20 ist in einem Trägergestell 8 über Drehlager 11 um eine horizontale Achse drehbar gelagert und lässt sich in beliebigen Positionen arretieren. In der in Fig. 2 dargesellten Position ist die Anfaseinrichtung 20 zur Aufnahme eines horizontal angeordneten Bleches 1, wie es in Fig. 5 gezeigt ist, ausgerichtet.

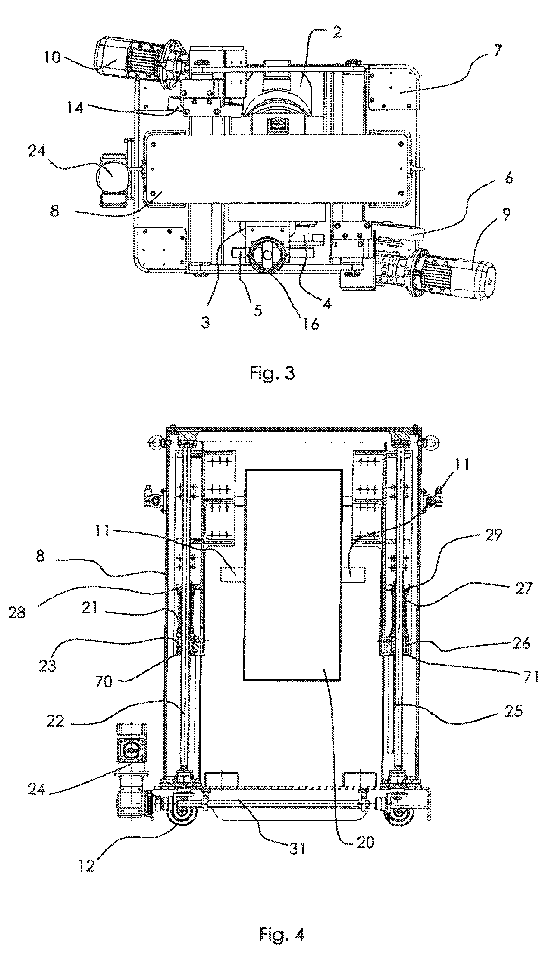

Wie Fig. 4 und 6 zeigen, ist in dem Trägergestell 8 zur Höhenverstellung der nur schematisch gezeigten Anfaseinrichtung 20 auf jeder Seite des Trägergestells 8 jeweils eine mit einem Antrieb 24 drehbare Gewindestange 22.25 angeordnet. Auf jeder der Gewindestangen 22,25 sitzt jeweils eine in einem Gehäuse 70,71 angeordnete Mutter 23,26, die bei Drehung der jeweiligen Gewindestange 22,25 mit dem Gehäuse 70,71 vertikal nach oben oder nach unten verschoben wird. Auf den Gehäusen 70,71 ist jeweils eine um die Gewindestange 22,25 geführte Schraubenfeder 21,27 angeordnet.

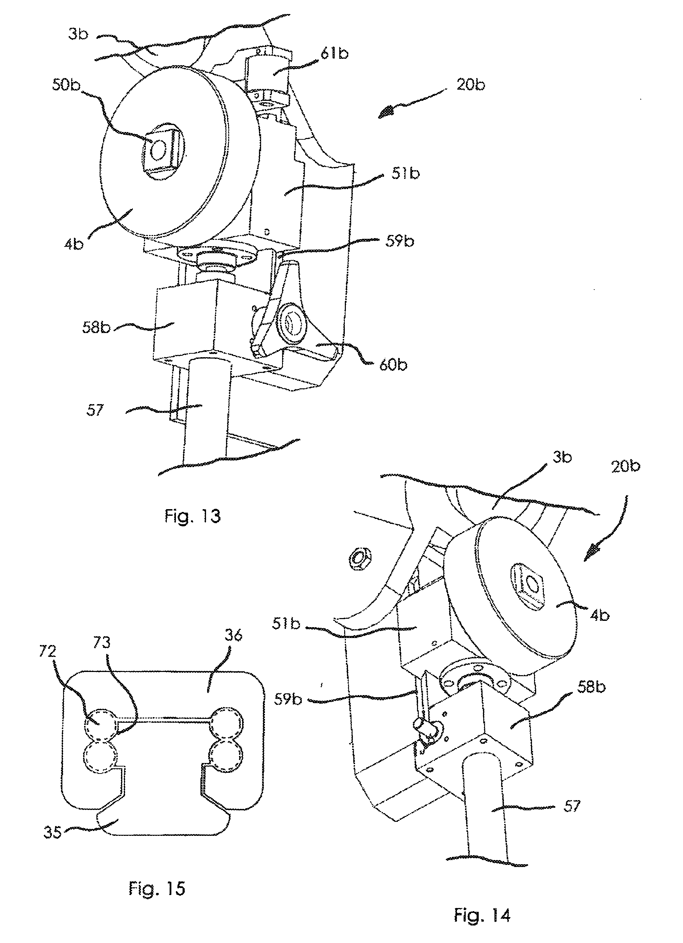

Auf den Schraubenfeder 21,27 sitzen Verbindungsstücke 28.29, die Gewindestangen 22,25 lose umgreifen, so dass sie entlang der Gewindestangen 22,25 frei beweglich sind. Wie Fig. 6 zeigt, sind die Verbindungsstücke 28,29 mit einem Lagerschlitten 36 versehen, der an einer Lagerschiene 35, die ein Doppel-T-Profil aufweist, in vertikaler Richtung verschiebbar ist. Die Lagerschiene 35 und der Lagerschlilten 36 sind in Fig. 15 im Schnitt gezeigt. Der Lagerschlitten 36 greift dazu über ein Kugellager 72.73 seitlich an der Führungsschiene 35 an. Die Verbindungsstücke 28,29 sind über hier nicht gezeigte Verbindungsstücke mit den Drehlagern 11 verbunden.

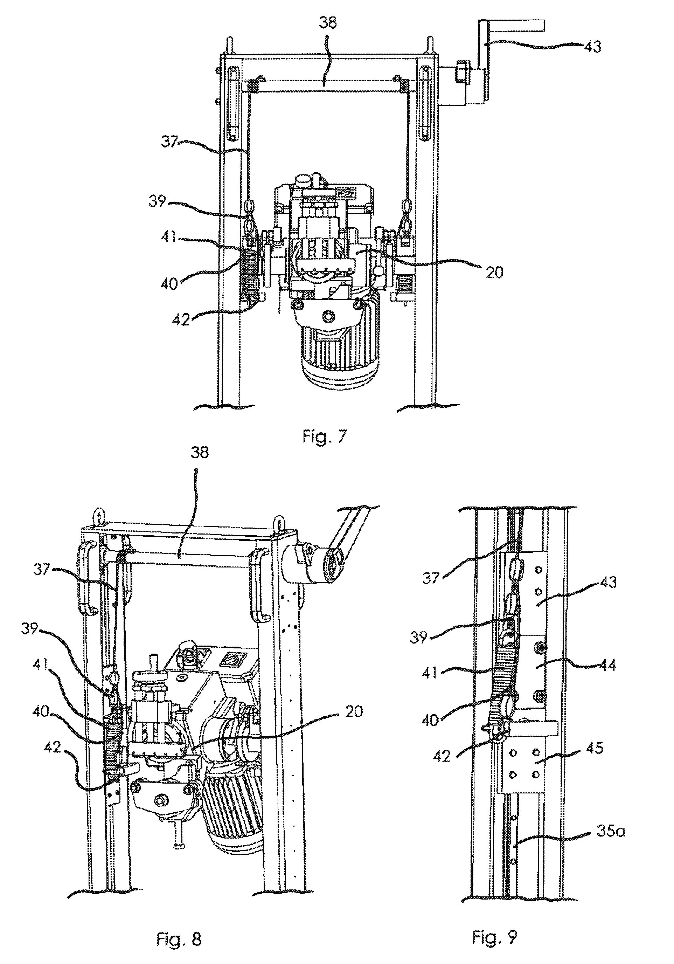

Es wird nun auf die Figuren 7 bis 14 Bezug genommen, wo gleiche oder gleichwirkende Teile mit derselben Bezugszahl wie in den Figuren 1 bis 6 bezeichnet sind und der betreffenden Bezugszahl jeweils ein Buchstabe beigefügt ist.

Wie den Figuren 7 bis 9 zu entnehmen ist, kann alternativ oder ergänzend zu der Verstellung mittels der Gewindestangen 22,25 an der Vorrichtung auch eine Seilwinde vorgesehen sein. Die Seilwinde umfasst eine Stange 38, auf die ein mit der Anfaseinrichtung 20 verbundenes Seil 37 aufgewickelt werden kann und eine mit der Stange 38 verbundene Kurbel 43. Anstatt der von Hand zu betätigenden Kurbel 43 ist auch vorstellbar, die Stange 38 mittels eines Motors zu drehen.

Das Seil 37 ist über ein Zwischenstück 39 mit einer Schraubenfeder 41 verbunden, die an einem mit der Anfaseinrichtung 20 verbundenen Verbindungsstück 42 angreift. Das Seil 37 ist zusätzlich mit einem Seilstück 40 versehen, das ebenfalls an dem Verbindungsstück 42 angreift und als Sicherung für den Fall dient, dass die Schraubenfeder 41 reißt, die Anfaseinrichtung 20 wird dann durch das Seil 37 und das Seilstück 39 gehalten.

Wie insbesondere Fig. 9 zu entnehmen ist, sind zur Führung der Anfaseinrichtung 20 neben dem Trägergesteli 8 Lagerschlitten 43,44,45 vorgesehen, die, wie oben bereits für das Ausführungsbeispiel nach Fig. 6 beschrieben, mit einer an dem Trägergestell 8 innen angebrachten Lagerschiene 35a zusammenwirken. Die Lagerschlitten 43,44,45 und die Lagerschiene 38a weisen dieselbe Form auf wie oben für die Führungsschiene 35 und den Lagerschlitten 36 erläutert und in Fig. 15 im Querschnitt gezeigt.

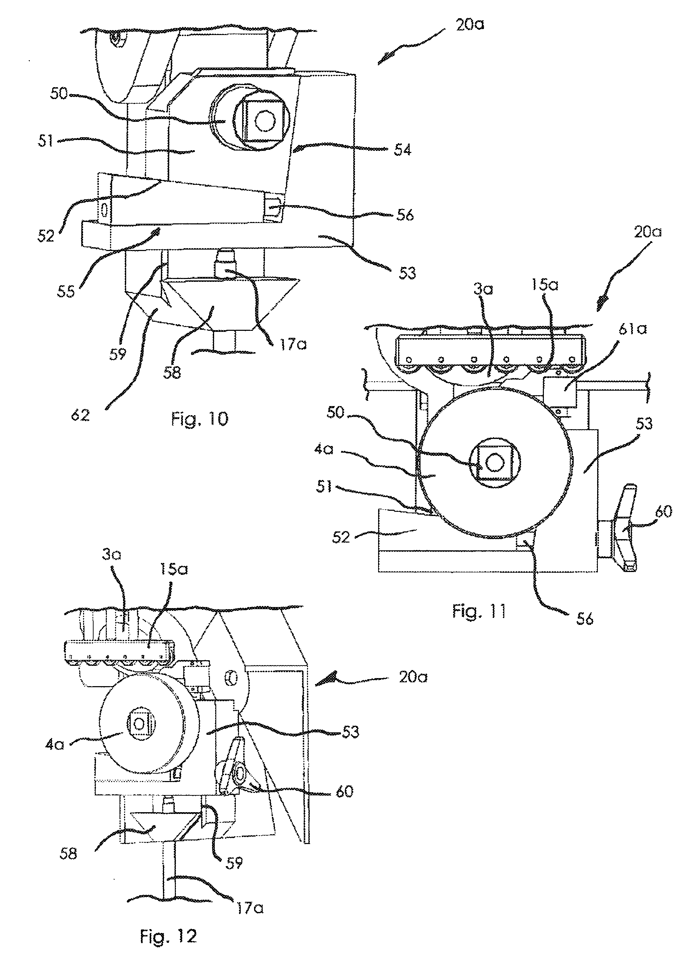

In einem weiteren Ausführungsbeispiel ist die Anfaseinrichtung 20 zur Änderung einer zu schneidenden Fasengröße verstellbar. Wie die Figuren 10 bis 12 zeigen, ist dazu eine Rollenachse 50 für eine Führungsrolle 4a auf einem Führungsschlitten 51 angeordnet, der auf Auflagerflächen 52,54 über eine Schwalbenschwanzführung verschiebbar gelagert ist. Der Führungsschlitten 51 ist seitlich durch die an dem Block 53 gebildete Auflagefläche 54 gehalten. Der Winkel zwischen den Auflageflächen 52 und 54 beträgt hier 90 °, könnte allerdings auch zwischen 80 ° und 1200 ° betragen. Die Auflagefläche 52 ist an einem Hubblock gebildet, der auf dem Block 53 an der Stelle 55 aufsitzt und dort in horizontaler Richtung über eine Gewindestange 56, die sich durch einen Griff 60 drehen lässt, verschiebbar ist. Wird der Hubblock in horizontaler Richtung auf dem Block 53 bewegt, verschiebt sich der Führungsschlitten 51 sowohl in vertikaler als auch in horizontaler Richtung. Dadurch wird der Abstand zu einem Schermesserrad 3a und somit die Größe der zu schneidenden Fase verändert.

Durch die Verstellung in horizontaler Richtung wird die Führungsrolle 4a in ihrer Position an sich mit Änderung der Fasengröße ändernden Belastungen an dem Blech angepasst, so dass sie das Blech optimal gegen das Schermesser 3a drücken kann. Dadurch wird vermieden, dass sich das Blech beim Schneiden der Fase verbiegt.

Der Führungsschlitten 51 ist zusammen mit dem Block 53 und den Auflagefläche 52,54 zur Einstellung der Anfaseinrichtung im Betrieb, d.h. beim Schneiden der Fase, vorgesehen. Ferner lässt sich der Block 53, wie den Figuren 10 und 12 zu entnehmen ist, zusätzlich entlang einer Schwalbenschwanzführung eines Trägerblocks 62 der Anfaseinrichtung 20 in vertikaler Richtung mittels eines Gewindestabs 17a verschieben. In dem Trägerblock 62 ist ein Gegenhaiterbfock 58 vorgesehen, der mit einem Innengewinde versehen ist, das mit der Gewindestab 17a zusammenwirkt.

In einem weiteren, in den Figuren 13 und 14 gezeigten Ausführungsbeispiel ist eine Führungsrolle 4b direkt auf einem Führungsschlitten 51 b befestigt, der sich entlang einer Schwalbenschwanzführung 59 mittels eines Schneckengetriebes 57 mit einer Getriebestange, das sich über ein Rad 60b bewegen lässt, verstellbar. Die Führungsrolle 4b lässt sich auf diese Weise in vertikaler Richtung oder, wenn die Schwalbenschwanzführung 59b zur vertikalen verkippt ist, zusätzlich in horizontaler Richtung verstellen.

Wie den Figuren 1 bis 3 zu entnehmen ist, ist auf jeder Seite des Trägergestells 8 jeweils ein Vorschubrad 6,14 vorgesehen, für das jeweils ein Antriebsmotor 9,10 vorgesehen ist. Das jeweilige Antriebsrad 9, 10 dient zur Bewegung des Blechs 1 gegenüber der Anfaseinrichtung 20. Je nachdem, in welcher Position sich die Anfaseinrichtung 20 in dem Trägergestell 8 befindet, wird entweder das Vorschubrad 6 oder das Vorschubrad 14 zur Bewegung des Blechs 1 verwendet. Wie Fig. 2 zeigt, ist die Achse des Vorschubrads 6,14 zur Längachse des Fahrgestells leicht verkippt, so dass es das Blech 1 stets zu dem Schermesserrad 3 hin und gegen das Führungsrad 61 drückt. Als Vorschubrad 6,14 könnte beispielsweise ein Schneckenrad als Gummi verwendet werden, das die drückende Bewegung noch weiter verstärkt.

Abweichend von den hier gezeigten Ausführungsbeispielen könnte das Vorschubrad 6,14 in der Vorrichtung auch derart angeordnet sein, dass es an der Stelle an dem Blech oder dem Rohr angreift, an dem bei dem Ausführungsbeispiel nach Fig. 1 die Führungsräder 5 angreifen, d.h. neben dem Schermesserrad angeordnet sein. Ein solches Vorschubrad könnte auch zusätzlich zu den in den Figuren 1 bis 3 gezeigten Vorschubrädern 6,14 vorgesehen sein.

Wie Fig. 5 zu entnehmen ist, ist das Fahrgestell 7 mit einer Lenkeinrichtung versehen, mit der sich die Rollen 12 gleichzeitig in dieselbe Richtung ausrichten lassen. Dazu sind die Räder 12 über hier nicht gezeigte Wellen mit einem Zahnriemen 30 verbunden, mit dem sich die jeweilige Ausrichtung der Räder 12 einstellen lässt.

Zum Schneiden einer Kante wird die erfindungsgemäße Vorrichtung, so wie es in Fig. 5 gezeigt ist, an ein horizontal gelagertes Blech 1 gefahren. Dazu kann sie an einem Griff 33 gegriffen und bewegt werden.

Die Anfaseinrichtung 20,20a,20b wird zunächst in eine der Position des Blechs 1 entsprechenden Höhe eingestellt. Dazu werden im Fall der Ausführungsform nach Fig. 4 und 6 mittels des Antriebs 24 und des damit verbundenen Getriebes 31 die Gewindestangen 22,25 gedreht, die Position der Muttern 23,26 verändert oder, im Fall der Ausführungsform nach den Fig. 7 bis 9, die Stange 38 mittels der Kurbel 43 gedreht und somit die Höhe der Anfaseinrichtung 20,20a,20b verstellt. Sollte die Anfaseinrichtung durch die Verstellung noch nicht die exakte Position erreicht haben, lässt sie sich entgegen der Kraft der Federn 21,22 oder 41 von Hand in die exakte Position bringen.

Anschließend wird mittels der Gewindestange 17,17a,17b die Führungsrolle 4 von unten an das Blech 1 derart herangeführt, dass das Blech 1 auf der Führungsrolle 4 aufliegt und die Position des Schermesserrads 3, insbesondere der beabsichtigte an der Kante einzubringende Fasenwinkel, eingestellt, wobei der Abstand zwischen der Führungsrolle 4 und dem Schermesserrad 3 zunächst verhältnismäßig klein gewählt wird, so dass nur eine kleine Fase geschnitten wird. Schließlich werden mittels des Drehrads 16 die Führungsrollen 5 von oben an das Blech 1 herangeführt. Vor Beginn des Fasvorgangs werden die Räder 12 des Fahrgestells 7 mittels des Zahnriemens 30 derart verstellt, dass sie in einem Winke! von etwa 5° in Richtung auf das Blech 1 lenken.

Zum Fasen der Kante des Blechs 1 wird das Scherrad 3 mittels des Antriebs 2 gedreht. Es schneidet dabei die Fase in die Kante und zieht die Vorrichtung entlang der Kante des Blechs 1. Liegt das Blech 1 an den Führungsrädern 15,61 sowie dem Führungsrad 4,4a,4b an, wird durch Veränderung der Position der Führungsrolle 4,4a,4b im Verhältnis zu dem Schermesserrad 3,3a,3b mittels der Verstelleinrichtungen nach den Figuren 10 bis 12 oder 13 und 14 die endgültig beabsichtige Fasengröße eingestellt.

Durch die im Winkel in Richtung zu der Kante des Blechs 1 gerichteten Räder 12 wird die Vorrichtung stets gegen die Kante gedrückt. Ferner drückt die Rolle 4 das Blech 1 stets von unten gegen das Schermesserrad 3.

In einem hier nicht gezeigten Ausführungsbeispiel ist die Führungsrolle 4 mit einem Antrieb versehen, der die Vorrichtung zusammen mit dem Schermesserrad an der Blechkante entlang zieht.

Ferner wird die Vorrichtung mittels des Antriebsrads 6, das von oben auf das Blech 1 aufliegt, an der Kante entlang gezogen.

Eine Führung der Vorrichtung von Hand während des Fasens der Kante ist nicht notwendig. Hat die Vorrichtung eine Kante des Blechs 1 vollständig gefast, bleibt sie am Ende des Blechs 1 stehen.

Um die andere Seite der Kante mit der Vorrichtung zu fasen, werden die Antriebsräder 6,14 mit ihren Antrieben 9,10 von der Vorrichtung abgenommen und die Anfaseinrichrung 20 um die Drehlager 11 herum um 180° gedreht. Das Fahrgestell 7 muss dann ebenfalls um 180° gedreht werden. Die Anfaseinrichtung 20 steht dann zu der in Fig. 5 gezeigten Stellung umgekehrter Stellung.

Die Vorschubräder 6,14 werden bei Bedarf wieder mit ihren Antrieben 9,10 an der Vorrichtung befestigt.

Die Vorrichtung kann wieder an das Blech 1 herangefahren werden und analog zu der oben beschriebenen Weise eine Fase auf der anderen Seite der Kante schneiden.

## Patentansprüche

1. Vorrichtung zur Bildung einer Fase an einer Kante eines Blechs (1) oder eines Rohrs, die eine Anfaseinrichtung (20) umfasst, welche ein mittels eines Antriebs (2) betriebenes, das Blech (1) oder das Rohr bearbeitendes Werkzeug (3) und eine das Blech (1) oder das Rohr stützende Führungseinrichtung (4,5,6) aufweist, wobei die Anfaseinrichtung (20) in der Vorrichtung federnd und in einer Trageinrichtung (8) der Vorrichtung höhenverstellbar gelagert ist,
**dadurch gekennzeichnet,**
**dass** die Anfaseinrichtung (20) in der Trageinrichtung (8) federnd gelagert ist.

2. Vorrichtung nach Anspruch 1,
**dadurch gekennzeichnet,**
**dass** die Lagerung eine gefederte Aufhängung (37-42) und/oder eine gefederte Abstützung (21-23,25-29)für die Anfaseinrichtung (20) umfasst.

3. Vorrichtung nach Anspruch 1 oder 2,
**dadurch gekennzeichnet,**
**dass** die Anfaseinrichtung (20) in der Trageinrichtung (8) stufenlos höhenverstellbar gelagert ist.

4. Vorrichtung nach einem der Ansprüche 1 bis 3,
**dadurch gekennzeichnet,**
**dass** die Lagerung eine Bewegung der Anfaseinrichtung (20) lediglich in der vertikalen Richtung erlaubt.

5. Vorrichtung nach einem der Ansprüche 1 bis 4,
**dadurch gekennzeichnet,**
**dass** die Lagerung eine Lagerschiene (35;35a), die vorzugsweise ein T- oder ein Doppel-T-Profil aufweist, und einen an der Lagerschiene (35;35a) verschiebbaren Lagerschlitten (36;43-45) umfasst.

6. Vorrichtung nach Anspruch 5,
**dadurch gekennzeichnet,**
**dass** der Lagerschlitten (36;43-45) die Lagerschiene (35;35a) umgreift.

7. Vorrichtung nach Anspruch 5 oder 6,
**dadurch gekennzeichnet,**
**dass** der Lagerschlitten (36;43-45) zum Angreifen an der Lagerschiene (35;35a), insbesondere dem T- oder Doppel-T-Profil, eine Kugellagerung (72,73), insbesondere eine Lagerung mit Kugelketten, aufweist.

8. Vorrichtung nach einem der Ansprüche 1 bis 7,
**dadurch gekennzeichnet,**
**dass** zur Höhenverstellung der Anfaseinrichtung (20) eine Seilwinde (37,38,43) oder eine Gewindespindel (22,23,25,26) vorgesehen ist.

9. Vorrichtung nach einem der Ansprüche 1 bis 8,
**dadurch gekennzeichnet,**
**dass** die Anfaseinrichtung (20) mittels einer Feder (21,27), insbesondere einer Schraubenfeder, die mit einem Seil (37) der Seilwinde (37,38,43) verbunden ist, gefedert gelagert ist.

10. Vorrichtung nach einem der Ansprüche 1 bis 9,
**dadurch gekennzeichnet,**
**dass** Anfaseinrichtung (20) zur Verstellung der Größe einer herzustellenden Fase im Betrieb eingerichtet ist.

11. Vorrichtung nach einem der Ansprüche 1 bis 10,
**dadurch gekennzeichnet,**
**dass** das genannte Werkzeug ein Fräskopf, ein Messerrad (3;3a;3b) einer Schermaschine, ein Schleifkopf und/oder eine ein Schleifband führende Kontaktscheibe ist.

12. Vorrichtung nach einem der Ansprüche 1 bis 11,
**dadurch gekennzeichnet,**
**dass** die Führungseinrichtung (4,5,6,14) zur Bewegung des Blechs (1) mittels zumindest eines Antriebsrads (6,14) versehen ist.

13. Vorrichtung nach einem der Ansprüche 1 bis 12,
**dadurch gekennzeichnet,**
**dass** die Anfaseinrichtung (20) in der Vorrichtung, vorzugsweise um 180°, verdrehbar gelagert ist.

14. Vorrichtung nach einem der Ansprüche 1 bis 13,
**dadurch gekennzeichnet,**
**dass** die Vorrichtung ein, vorzugsweise lenkbares, Fahrgestell (7) umfasst, mit dem sie auf einem Untergrund fahrbar ist und auf dem die Trageinrichtung (8) angeordnet ist, an der die Anfaseinrichtung (20) gelagert ist.

15. Verfahren zur Bildung einer Fase an einer Kante eines Blechs (1) oder eines Rohrs, bei dem die Kante und eine Vorrichtung, die eine Anfaseinrichtung (20), welche ein das Blech (1) oder das Rohr bearbeitendes Werkzeug (3) und eine Führungseinrichtung (4,5,6,14) für das Blech (1) oder das Rohr umfasst, unter Bildung der Fase im Verhältnis zueinander bewegt werden, wobei die Anfaseinrichtung (20) in einer Trageinrichtung (8) der Vorrichtung höhenverstellbar gelagert wird und Änderungen der Stellung des Blechs (1) bzw. des Rohrs im Verhältnis zu der Vorrichtung durch eine federnde Lagerung der Anfaseinrichtung (20) in der Vorrichtung ausgeglichen werden,
**dadurch gekennzeichnet,**
**dass** Änderungen der Stellung des Blechs (1) bzw. des Rohrs im Verhältnis zu der Vorrichtung durch eine federnde Lagerung der Anfaseinrichtung (20) in der Trageinrichtung (9) ausgeglichen werden.

## Claims

1. Apparatus for forming a chamfer on an edge of a metal sheet (1) or of a pipe, said apparatus comprising a chamfering device (20) which has a tool (3) that is operated by means of a drive (2) and processes the metal sheet (1) or the pipe, and a guide device (4, 5, 6) which supports the metal sheet (1) or the pipe, wherein the chamfering device (20) is mounted in a resilient manner in the apparatus and in a height-adjustable manner in a supporting device (8) of the apparatus,
**characterized**
**in that** the chamfering device (20) is mounted in a resilient manner in the supporting device (8).

2. Apparatus according to Claim 1,
**characterized**
**in that** the mounting comprises a sprung suspension (37-42) and/or a sprung support (21-23, 25-29) for the chamfering device (20).

3. Apparatus according to Claim 1 or 2,
**characterized**
**in that** the chamfering device (20) is mounted so as to be height-adjustable in a continuously variable manner in the supporting device (8).

4. Apparatus according to one of Claims 1 to 3,
**characterized**
**in that** the mounting allows the chamfering device (20) to move only in the vertical direction.

5. Apparatus according to one of Claims 1 to 4,
**characterized**
**in that** the mounting comprises a bearing rail (35; 35a) which has preferably a T-shaped or double-T-shaped profile, and a bearing carriage (36; 43-45) which is displaceable on the bearing rail (35; 35a).

6. Apparatus according to Claim 5,
**characterized**
**in that** the bearing carriage (36; 43-45) engages around the bearing rail (35; 35a).

7. Apparatus according to Claim 5 or 6,
**characterized**
**in that**, in order to act on the bearing rail (35; 35a), in particular the T-shaped or double-T-shaped profile, the bearing carriage (36; 43-45) has a ball mounting (72, 73), in particular a mounting having ball chains.

8. Apparatus according to one of Claims 1 to 7,
**characterized**
**in that**, in order to adjust the height of the chamfering device (20), provision is made of a cable winch (37, 38, 43) or a threaded spindle (22, 23, 25, 26).

9. Apparatus according to one of Claims 1 to 8,
**characterized**
**in that** the chamfering device (20) is resiliently mounted by means of a spring (21, 27), in particular a coil spring, which is connected to a cable (37) of the cable winch (37, 38, 43).

10. Apparatus according to one of Claims 1 to 9,
**characterized**
**in that** the chamfering device (20) is set up to adjust, during operation, the size of a chamfer to be produced.

11. Apparatus according to one of Claims 1 to 10,
**characterized**
**in that** said tool is a milling head, a cutter wheel (3; 3a; 3b) of a shearing machine, a grinding head and/or a contact wheel that guides a grinding belt.

12. Apparatus according to one of Claims 1 to 11,
**characterized**
**in that** the guide device (4, 5, 6, 14) is provided to move the metal sheet (1) by means of at least one drive wheel (6, 14).

13. Apparatus according to one of Claims 1 to 12,
**characterized**
**in that** the chamfering device (20) is mounted in the apparatus so as to be rotatable, preferably through 180°.

14. Apparatus according to one of Claims 1 to 13,
**characterized**
**in that** the apparatus comprises a preferably steerable chassis (7) by way of which it is able to move on an underlying surface and on which the supporting device (8), on which the chamfering device (20) is mounted, is arranged.

15. Method for forming a chamfer on an edge of a metal sheet (1) or a pipe, in which the edge and an apparatus, which comprises a chamfering device (20) which comprises a tool (3) that processes the metal sheet (1) or the pipe and a guide device (4, 5, 6, 14) for the metal sheet (1) or the pipe, are moved in relation to one another, forming the chamfer, wherein the chamfering device (20) is mounted in a height-adjustable manner in a supporting device (8) of the apparatus and changes in the position of the metal sheet (1) or of the pipe in relation to the apparatus are compensated by resilient mounting of the chamfering device (20) in the apparatus,
**characterized**
**in that** changes in the position of the metal sheet (1) or of the pipe in relation to the apparatus are compensated by resilient mounting of the chamfering device (20) in the supporting device (9).

## Revendications

1. Dispositif pour la formation d'un chanfrein sur une arête d'une tôle (1) ou d'un tube, qui comprend un dispositif de chanfreinage (20), lequel inclut un outil (3) entraîné au moyen d'un entraînement (2) et usinant la tôle (1) ou le tube, et un dispositif de guidage (4, 5, 6) soutenant la tôle (1) ou le tube, dans lequel le dispositif de chanfreinage (20) est monté avec effet ressort dans le dispositif et déplaçable en hauteur dans un moyen porteur (8) du dispositif,
**caractérisé en ce que**
le dispositif de chanfreinage (20) est monté avec effet ressort dans le moyen porteur (8).

2. Dispositif selon la revendication 1,
**caractérisé en ce que** le montage inclut une suspension à effet ressort (37-42) et/ou un soutien à effet ressort (21-23, 25-29) pour le dispositif de chanfreinage (20).

3. Dispositif selon la revendication 1 ou 2,
**caractérisé en ce que** le dispositif de chanfreinage (20) est monté dans le moyen porteur (8) de manière déplaçable en hauteur en continu.

4. Dispositif selon l'une des revendications 1 à 3,
**caractérisé en ce que** le montage permet un déplacement du dispositif de chanfreinage (20) uniquement en direction verticale.

5. Dispositif selon l'une des revendications 1 à 4,
**caractérisé en ce que** le montage inclut un rail de montage (35 ; 35a) qui présente de préférence un profil en T ou en double T, et un chariot de montage (36 ; 43-45) déplaçable sur le rail de montage (35 ; 35a).

6. Dispositif selon la revendication 5,
**caractérisé en ce que** le chariot de montage (36 ; 43-45) enserre le rail de montage (35 ; 35a).

7. Dispositif selon la revendication 5 ou 6,
**caractérisé en ce que** le chariot de montage (36 ; 43-45) comprend un montage à billes (73, 72), en particulier un montage avec des chaînes de billes, pour l'engagement sur le rail de montage (35 ; 35a), en particulier sur le profil en T ou en double T.

8. Dispositif selon l'une des revendications 1 à 7,
**caractérisé en ce qu'**il est prévu un treuil à câble (37, 38, 43) ou une broche filetée (22, 23, 25, 26) pour le déplacement en hauteur du dispositif de chanfreinage (20).

9. Dispositif selon l'une des revendications 1 à 8,
**caractérisé en ce que** le dispositif de chanfreinage est monté avec effet ressort au moyen d'un ressort (21, 27), en particulier un ressort à boudin, qui est relié à un câble (37) du treuil à câble (37, 38, 43).

10. Dispositif selon l'une des revendications 1 à 9,
**caractérisé en ce que** le dispositif de chanfreinage (20) est conçu pour régler la taille d'un chanfrein à produire en service.

11. Dispositif selon l'une des revendications 1 à 10,
**caractérisé en ce que** l'outil précité est une tête de fraisage, une roue à couteaux (3 ; 3a ; 3b) d'une machine de cisaillement, une tête de meulage et/ou un disque de contact guidant une bande abrasive.

12. Dispositif selon l'une des revendications 1 à 11,
**caractérisé en ce que** le dispositif de guidage (4, 5, 6, 14) est pourvu d'au moins une roue d'entraînement pour le déplacement de la tôle (1) au moyen de celle-ci.

13. Dispositif selon l'une des revendications 1 à 12,
**caractérisé en ce que** le dispositif de chanfreinage (20) est monté de manière rotative dans le dispositif, de préférence sur 180°.

14. Dispositif selon l'une des revendications 1 à 13,
**caractérisé en ce que** le dispositif inclut un châssis de déplacement (7), de préférence capable d'être dirigé, au moyen duquel il est déplaçable sur un sol et sur lequel est agencé le moyen porteur (8) sur lequel est monté le dispositif de chanfreinage (20).

15. Procédé pour réaliser un chanfrein sur une arête d'une tôle (1) ou d'un tube, dans lequel on déplace l'une par rapport à l'autre l'arête et un dispositif, qui inclut un dispositif de chanfreinage (20) qui comprend un outil (3) usinant la tôle (1) ou le tube et un dispositif de guidage (4, 5, 6, 14) pour la tôle (1) ou le tube en réalisant le chanfrein, dans lequel le dispositif de chanfreinage (20) est monté déplaçable en hauteur dans un moyen porteur (8) du dispositif et des variations de la situation de la tôle (1) ou du tube en relation au dispositif sont compensées par un montage à effet ressort du dispositif de chanfreinage (20) dans le dispositif,
**caractérisé en ce que** des variations de la situation de la tôle (1) ou du tube en relation au dispositif sont compensées par un montage à effet ressort du dispositif de chanfreinage (20) dans le moyen porteur (9).
